# FASCICULE DE BREVET EUROPEEN

(11) **EP 3 875 335 B1**
(45) Date de publication et mention de la délivrance du brevet: **17.05.2023**
(21) Numéro de dépôt: 21159965.9
(22) Date de dépôt: 01.03.2021
(51) Int. Cl.: B61C 17/04, B60K 35/00, G06F 3/042, B60K 37/00, B60K 37/06, B61L 15/00

(54) **INTERFACE DE COMMANDE POUR VÉHICULE FERROVIAIRE**
STEUERSCHNITTSTELLE FÜR SCHIENENFAHRZEUG
CONTROL INTERFACE FOR A RAIL VEHICLE

(30) Priorité: 03.03.2020 FR 2002114
(43) Date de publication de la demande: 08.09.2021
(73) Titulaire: ALSTOM Transport Technologies, 93400 Saint-Ouen (FR)
(72) Inventeur: AYME, Nicolas, 17220 SAINTE SOULLE (FR)
(74) Mandataire: Lavoix

(56) Documents cités:
- EP-A1- 1 798 588
- WO-A1-2018/083218
- WO-A2-2013/083814
- DE-A1-102008 059 810
- US-A1- 2008 211 779

## Description

La présente invention concerne une interface de commande pour véhicule ferroviaire du type comportant : un pupitre de commande ; un dispositif de projection d'images sur le pupitre de commande, chaque image représentant des moyens de commande du véhicule et définissant une zone de commande sur le pupitre ; et un dispositif de détection d'un contact entre un opérateur et la ou les zones de commande.

Généralement, les interfaces de commande équipant les véhicules ferroviaires comportent un pupitre formé d'une structure assemblée à une pluralité d'éléments mécaniques de commande, de type boutons, poussoirs ou manettes. Chaque élément de commande a ainsi un emplacement spécifique sur le pupitre, ce qui limite les possibilités de modularité de l'interface de commande. Par ailleurs, l'encombrement de certains éléments de commande impose leur position sur le pupitre.

En outre, les éléments mécaniques de commande sont connectés à un dispositif de contrôle du véhicule par l'intermédiaire de nombreux câbles, qui génèrent du poids et de l'encombrement.

Pour limiter ces inconvénients, il est connu de remplacer le pupitre par un écran tactile projetant l'image d'un tel pupitre, comme décrit par exemple dans le document EP1491444. Dans le domaine ferroviaire, le document EP 3 339 935 A1 décrit l'utilisation d'un projecteur pour afficher sur un "afficheur tête haute" des informations nécessaires à la conduite du véhicule.

La présente invention a pour but de proposer une interface de commande permettant de supprimer les inconvénients décrits ci-dessus. A cet effet, l'invention a pour objet un véhicule ferroviaire présentant les caractéristiques techniques de la revendication 1.

Suivant d'autres aspects avantageux de l'invention, l'interface de commande de la cabine de conduite du véhicule ferroviaire précité présente l'une ou plusieurs des caractéristiques suivantes, prises isolément ou suivant toutes les combinaisons techniquement possibles :
- le pupitre de commande définit au moins une surface de projection d'images ; et le dispositif de projection comporte : un vidéoprojecteur, apte à projeter, sur l'au moins une surface de projection, des images définissant les zones de commande ;
- l'au moins une surface de projection est sensiblement orientée vers le haut ;
- le dispositif de détection comporte en outre un détecteur permettant de confirmer un contact entre un opérateur et la zone de commande.

Suivant un autre aspect avantageux de l'invention, le véhicule présente la caractéristique suivante:
- la caméra du dispositif de détection est disposée au niveau d'un plafond de la cabine de conduite.

L'invention se rapporte en outre à un procédé de fonctionnement du véhicule décrit ci-dessus, comprenant les étapes suivantes : projection d'une image définissant une zone de commande sur le pupitre de commande par le dispositif de projection ; puis détection d'un contact entre un opérateur et la zone de commande par le dispositif de détection ; puis association dudit contact avec une instruction de commande ; puis transmission de ladite instruction de commande au dispositif fonctionnel correspondant.

L'invention sera mieux comprise à la lecture de la description qui va suivre, donnée uniquement à titre d'exemple non limitatif et faite en se référant aux dessins sur lesquels :
[Fig 1] la figure 1 est une vue schématique d'un véhicule comprenant une cabine de conduite équipée d'un dispositif de commande selon un mode de réalisation de l'invention ;
[Fig 2] la figure 2 est une vue schématique de la cabine de conduite et du dispositif de commande de la figure 1 ; et
[Fig 3] la figure 3 est une représentation, sous forme de logigramme, d'un procédé de fonctionnement du véhicule de la figure 1.

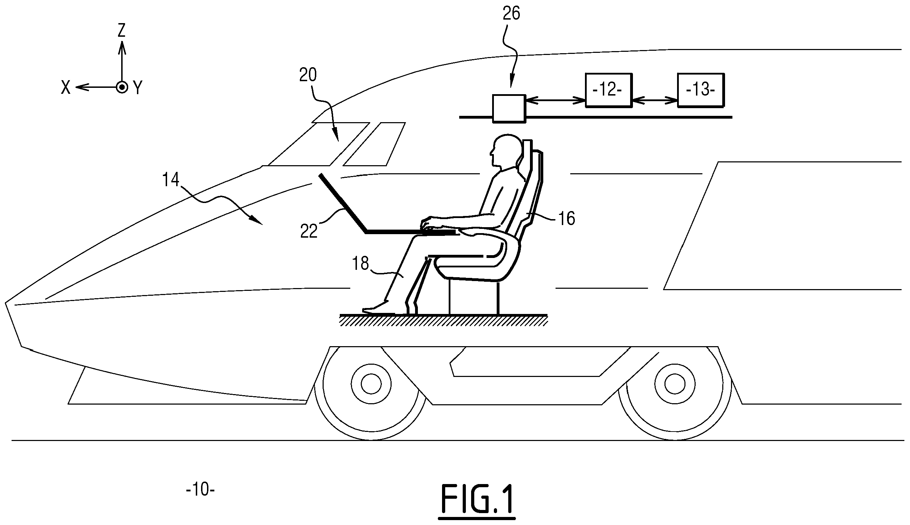

La figure 1 représente un véhicule terrestre 10. Dans la description qui suit, le véhicule terrestre 10 est un véhicule ferroviaire de type train ou tram. En variante non représentée, le véhicule terrestre 10 est un véhicule routier, de type autobus.

Dans le mode de réalisation représenté, le véhicule ferroviaire 10 comporte un dispositif électronique de contrôle 12.

Le véhicule ferroviaire 10 comporte également des dispositifs fonctionnels 13, de type avertisseurs lumineux ou sonore, chaine de traction, système de freinage, lesdits dispositifs fonctionnels étant reliés au dispositif électronique de contrôle 12 et commandés via le dispositif électronique de contrôle 12.

Le véhicule ferroviaire 10 comporte également une cabine de conduite 14, disposée à l'avant dudit véhicule.

La cabine de conduite 14 comporte notamment un siège 16 destiné à recevoir un opérateur 18 apte à conduire le véhicule ferroviaire 10.

La cabine de conduite 14 comporte une interface de commande 20, permettant à l'opérateur 18 d'activer des commandes du dispositif électronique de contrôle 12 du véhicule ferroviaire 10. Lesdites commandes correspondent notamment aux dispositifs fonctionnels 13.

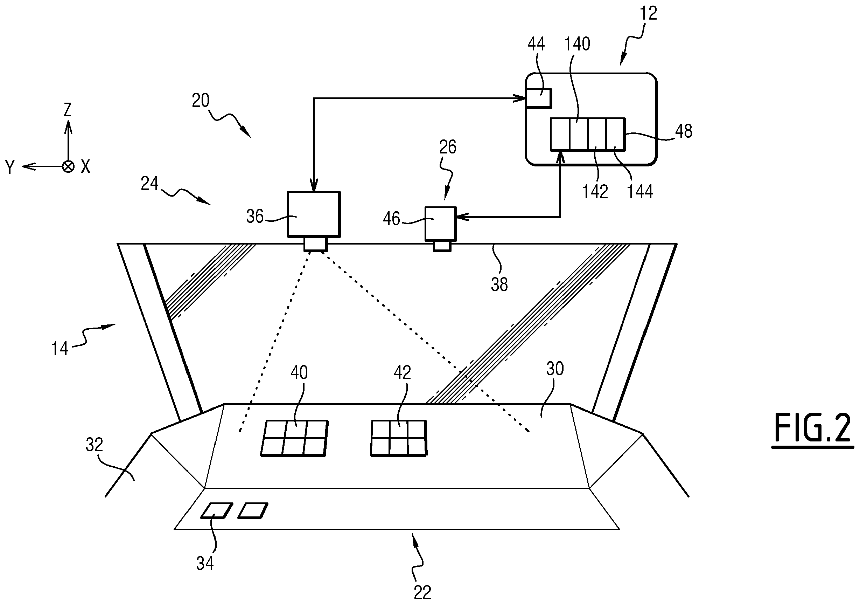

L'interface de commande 20, également visible sur la figure 2, comporte notamment : un pupitre de commande 22 ; un dispositif de projection 24 ; et un dispositif de détection 26.

Le pupitre de commande 22 présente une forme adaptée à la cabine de conduite 14, notamment selon des critères d'ergonomie.

Le pupitre de commande 22 définit une ou plusieurs surfaces 30, 32 de projection, de préférence orientées vers le haut. Les surfaces 30, 32 de projection sont planes ou éventuellement incurvées.

De manière optionnelle, le pupitre de commande 22 inclut un ou plusieurs éléments mécaniques 34 de commande, de type poussoir ou manette. Comme décrit ci-après, lesdits éléments mécaniques 34 sont de préférence destinés à des commandes d'urgence ou de sécurité.

Le dispositif de projection 24 comporte un vidéoprojecteur 36, de préférence disposé au niveau d'un plafond 38 de la cabine de conduite 14.

Le vidéoprojecteur 36 est apte à projeter, sur la ou les surfaces de projection 30, 32, des images définissant des zones 40, 42 de commande. De telles images de zones 40, 42 de commande sont notamment reconnaissables et interprétables par l'opérateur 18, comme il sera décrit ci-après.

De manière optionnelle, le vidéoprojecteur 36 est apte à projeter sur le pupitre de commande 22, une image reproduisant l'emplacement de commandes sur des pupitres existants.

A cet effet, le dispositif de projection 24 comporte en outre une base de données 44 mémorisant une ou des images de zones 40, 42 de commande. Ladite base de données est reliée au vidéoprojecteur 36. Dans le mode de réalisation représenté, la base de données 44 est stockée dans le dispositif électronique 12 de contrôle du véhicule 10, le vidéoprojecteur 36 étant relié audit dispositif électronique 12.

L'image projetée par le vidéoprojecteur 36 peut notamment être adaptée à des surfaces de projection 30, 32 de toutes formes, notamment incurvées.

Le dispositif de détection 26 est apte à détecter un contact entre l'opérateur 18 et l'une des zones 40, 42 de commande projetées sur le pupitre 22.

Le dispositif de détection 26 comporte une caméra 46, apte à enregistrer une image d'un contact entre l'opérateur 18 et l'une des zones 40, 42 de commande projetées sur le pupitre 22. La caméra 46 est de préférence disposée au niveau du plafond 38 de la cabine de conduite 14.

Le dispositif de détection 26 comporte en outre un dispositif 48 d'analyse d'image. Ledit dispositif d'analyse est par exemple un programme 48 mémorisé dans le dispositif électronique 12 de contrôle du véhicule 10, la caméra 46 étant reliée audit dispositif électronique 12.

Le programme 48 est apte à faire correspondre l'image du contact entre l'opérateur 18 et une zone 40, 42 de commande avec l'activation d'une commande 140, 142 correspondante.

Selon un mode de réalisation de l'invention, le dispositif de détection 26 comporte en outre un détecteur de type radar (non représenté) permettant de confirmer un contact entre l'opérateur 18 et la zone de commande 40, 42.

De préférence, le dispositif électronique de contrôle 12 est par ailleurs apte à faire correspondre une activation d'un élément mécanique 34 de commande du pupitre 22 avec l'activation d'une commande de sécurité, telle qu'un freinage d'urgence.

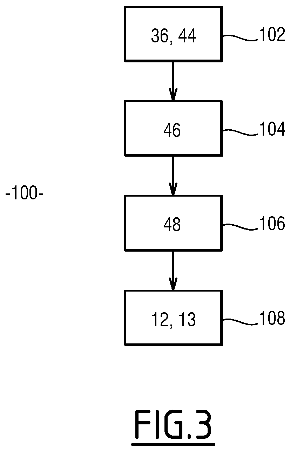

Un procédé 100 de fonctionnement du véhicule 10 et de l'interface de commande 20 va maintenant être décrit, à l'appui de la figure 3.

Dans une première étape 102, le vidéoprojecteur 36 projette sur le pupitre de commande 22 une image mémorisée dans la base de données 44, ladite image définissant plusieurs zones de commande 40, 42 sur ledit pupitre 22.

Dans une deuxième étape 104, la caméra 46 enregistre une image de l'opérateur 18 appuyant sur l'une 40 desdites zones de commande.

Dans une troisième étape 106, le programme 48 du dispositif de détection 26 associe ladite image à l'activation d'une commande 140 mémorisée dans ledit programme.

Dans une quatrième étape 108, le dispositif électronique de contrôle 12 communique, au dispositif fonctionnel 13 associé, un ordre correspondant à la commande 140.

Ainsi, le pupitre de commande 22 peut être utilisé comme un pupitre de commande classique, tout en présentant une modularité beaucoup plus grande qu'un tel pupitre. La base de données 44 permet en effet de modifier facilement la configuration du pupitre de commande 22 en changeant l'image projetée par le vidéoprojecteur 36.

Un même pupitre 22 peut ainsi être adapté à plusieurs types différents de véhicules 10.

Par ailleurs, l'invention permet d'éliminer l'encombrement et le poids associés au câblage généralement disposé sous le pupitre. Le siège 16 de l'opérateur peut ainsi être disposé partiellement sous ledit pupitre 22, pour un gain de place dans la cabine 14.

La diminution du nombre d'éléments mécaniques sur le pupitre 22 facilite en outre l'entretien dudit pupitre.

Par sécurité en cas de défaillance du système électronique, des éléments mécaniques 34 de commande du pupitre 22 sont de préférence conservés pour des fonctions telles que le freinage d'urgence.

## Revendications

1. Véhicule ferroviaire (10), comprenant une cabine de conduite (14), ladite cabine de conduite comportant une interface de commande (20), ladite interface comprenant : un pupitre de commande (22) ; un dispositif (24) de projection d'images sur le pupitre de commande, chaque image représentant des moyens de commande du véhicule et définissant une zone de commande (40, 42) sur le pupitre ; et un dispositif (26) de détection d'un contact entre un opérateur (18) et la ou les zones de commande,
le dispositif de détection comprenant : une caméra (46) apte à enregistrer une image d'un contact entre l'opérateur et le pupitre ; et un dispositif (48) d'analyse d'image, apte à faire correspondre ledit contact avec une commande d'un dispositif fonctionnel du véhicule ;
le véhicule comprenant en outre un dispositif électronique de contrôle (12), relié à l'interface de commande, et des dispositifs fonctionnels (13) reliés audit dispositif électronique de contrôle ;
le pupitre de commande (22) de l'interface de commande comportant un élément mécanique (34) de commande ; et
le dispositif électronique de contrôle (12) étant apte à faire correspondre une activation dudit élément mécanique (34) avec l'activation d'une commande de sécurité dudit véhicule ferroviaire, telle qu'un freinage d'urgence.

2. Véhicule ferroviaire selon la revendication 1, dans lequel : le pupitre de commande (22) définit au moins une surface (30, 32) de projection d'images ; et le dispositif de projection (24) comporte : un vidéoprojecteur (36), apte à projeter, sur l'au moins une surface de projection, des images définissant les zones (40, 42) de commande.

3. Véhicule ferroviaire selon la revendication 2, dans lequel l'au moins une surface de projection (30, 32) est sensiblement orientée vers le haut.

4. Véhicule ferroviaire selon l'une des revendications précédentes, dans lequel le dispositif de détection (26) comporte en outre un détecteur permettant de confirmer un contact entre un opérateur (18) et la zone de commande (40, 42).

5. Véhicule ferroviaire selon l'une des revendications précédentes, dans lequel la caméra (46) du dispositif de détection est disposée au niveau d'un plafond (38) de la cabine de conduite.

6. Procédé de fonctionnement du véhicule ferroviaire selon l'une des revendications précédentes, comprenant les étapes suivantes :
- projection (102) d'une image définissant une zone de commande (40, 42) sur le pupitre de commande (22) par le dispositif de projection (24) ; puis
- détection (104) d'un contact entre un opérateur (18) et la zone de commande par le dispositif de détection (26) ; puis
- association (106) dudit contact avec une instruction de commande (140) ; puis
- transmission (108) de ladite instruction de commande au dispositif fonctionnel (13) correspondant.

## Patentansprüche

1. Schienenfahrzeug (10), umfassend einen Führerstand (14), der Führerstand umfassend eine Steuerschnittstelle (20), die Schnittstelle umfassend:
ein Steuerpult (22); eine Vorrichtung (24) zum Projizieren von Bildern auf das Steuerpult, wobei jedes Bild Steuereinrichtungen des Fahrzeugs darstellt und einen Steuerbereich (40, 42) auf dem Pult definiert; und eine Vorrichtung (26) zum Erfassen eines Kontakts zwischen einem Bediener (18) und dem oder den Steuerbereichen,
die Erfassungsvorrichtung umfassend: eine Kamera (46), die geeignet ist, um ein Bild eines Kontakts zwischen dem Bediener und dem Steuerpult aufzuzeichnen; und eine Vorrichtung (48) zu Bildanalyse, die geeignet ist, um den Kontakt mit einer Steuerung einer Funktionsvorrichtung des Fahrzeugs in Übereinstimmung zu bringen;
das Fahrzeug ferner umfassend eine elektronische Kontrollvorrichtung (12), die mit der Steuerschnittstelle verbunden ist, und Funktionsvorrichtungen (13), die mit der elektronischen Kontrollvorrichtung verbunden sind;
wobei das Steuerpult (22) der Steuerschnittstelle Folgendes umfasst ein mechanisches Steuerelement (34); und
wobei die elektronische Kontrollvorrichtung (12)
geeignet ist, um eine Aktivierung
des mechanischen Elements (34) mit der Aktivierung einer Sicherheitssteuerung des Schienenfahrzeugs, wie z. B. einer Notbremsung, in Übereinstimmung zu bringen.

2. Schienenfahrzeug nach Anspruch 1, wobei: das Steuerpult (22) mindestens eine Oberfläche (30, 32) zur Bildprojektion definiert; und die Projektionsvorrichtung (24) Folgendes umfasst: einen Videoprojektor (36), der geeignet ist, um Bilder auf die mindestens eine Projektionsfläche zu projizieren, die die Steuerbereiche (40, 42) definieren.

3. Schienenfahrzeug nach Anspruch 2, wobei die mindestens eine Projektionsoberfläche (30, 32) im Wesentlichen nach oben ausgerichtet ist.

4. Schienenfahrzeug nach einem der vorherigen Ansprüche, wobei die Erfassungsvorrichtung (26) ferner einen Detektor umfasst, der es ermöglicht, einen Kontakt zwischen einem Bediener (18) und dem Steuerbereich (40, 42) zu bestätigen.

5. Schienenfahrzeug nach einem der vorherigen Ansprüche, wobei die Kamera (46) der Erfassungsvorrichtung auf Höhe einer Decke (38) des Führerstands angeordnet ist.

6. Funktionsverfahren des Schienenfahrzeugs nach einem der vorherigen Ansprüche, umfassend die folgenden Schritte:
- Projizieren (102) eines Bilds, das einen Steuerbereich (40, 42) definiert, durch die Projektionsvorrichtung (24) auf den Steuerpult (22); dann
- Erfassen (104) eines Kontakts zwischen einem Bediener (18) und dem Steuerbereich durch die Erfassungsvorrichtung (26); dann
- Assoziieren (106) des Kontakts mit einer Steueranweisung (140); dann
- Übertragen (108) der Steueranweisung an die entsprechende Funktionsvorrichtung (13).

## Claims

1. A railway vehicle (10), comprising a driver's cab (14), said driver's cab having a control interface (20), said interface comprising: a control console (22); a device (24) for projecting images onto the control console, each image representing control means of the vehicle and defining a control area (40, 42) on the console; and a device (26) for detecting contact between an operator (18) and the control area(s),
the sensing device comprising: a camera (46) adapted to record an image of a contact between the operator and the console; and an image analysis device (48) adapted to match said contact with a command of a vehicle operating device;
the vehicle further comprising an electronic control device (12), connected to the command interface, and functional devices (13) connected to said electronic control device;
the control panel (22) of the command interface comprising
a mechanical command element (34); and
- an electronic control unit (12), and
able to match an activation
of said mechanical element (34) with the activation of a safety control of said railway vehicle, such as emergency braking.

2. A railway vehicle according to claim 1, wherein: the command console (22) defines at least one image projection surface (30, 32); and the projection device (24) comprises: a video projector (36), capable of projecting, onto the at least one projection surface, images defining the command areas (40, 42).

3. A railway vehicle according to claim 2, wherein the at least one projection surface (30, 32) is substantially upwardly facing.

4. A railway vehicle according to any of the preceding claims, wherein the sensing device (26) further comprises a detector for confirming a contact between an operator (18) and the command area (40, 42).

5. A railway vehicle according to any of the preceding claims, wherein the camera (46) of the detection device is arranged at a ceiling (38) of the driver's cab.

6. A method of operating the railway vehicle according to any of the preceding claims, comprising the following steps:
- projection (102) of an image defining a command area (40, 42) onto the control console (22) by the projection device (24); and
- detection (104) of contact between an operator (18) and the command area by the detection device (26); and
- association (106) of said contact with a command instruction (140); and
- transmission (108) of said command instruction to the corresponding functional device (13).
